# EUROPEAN PATENT SPECIFICATION

(11) **EP 3 945 798 B1**
(45) Date of publication and mention of the grant of the patent: **14.05.2025**
(21) Application number: 20713924.7
(22) Date of filing: 01.04.2020
(51) Int. Cl.: A01K 61/60, H02S 10/40, F24S 21/00

(54) **FLOATING SOLAR-POWERED MULTI-UNIT FISH CAGE**
SCHWIMMENDER SOLARBETRIEBENER MEHRTEILIGER FISCHKÄFIG
CAGE POUR POISSONS FLOTTANTE À UNITÉS MULTIPLES ET À ÉNERGIE SOLAIRE

(30) Priority: 02.04.2019 EP 19166855
(43) Date of publication of application: 09.02.2022
(73) Proprietor: Novaton Erneuerbare Energien AG, 8005 Zürich (CH)
(72) Inventor: KABBANI, Issam, 1009 Pully (CH); LEDERBERGER-HINDERLING, Christine, 8052 Zürich (CH)
(74) Representative: Kasche & Partner
(86) International application number: PCT/EP2020/059206
(87) International publication number: WO 2020/201325

(56) References cited:
- CN-A- 103 523 183
- JP-U- 3 220 399
- KR-A- 20110 004 967
- KR-A- 20140 046 497

## Description

The present invention is directed to a floating solar-powered multi-unit fish cage, comprising a floating planar grid defining at least two grid interspaces, at least one or more solar units, and at least one or more fish cages, wherein at least one fish cage is allocated to at least one grid interspace, at least one solar unit is allocated to at least one grid interspace, at least partially or completely covering said grid interspace, thus forming a solar unit-covered grid interspace, at least one solar unit-covered grid interspace partially spans at least one fish cage forming a partially covered fish cage and which partially covered fish cage allows for caged fish to voluntarily position under the at least one at least partially solar unit-covered grid interspace, and wherein the at least one solar unit-covered grid interspace (6) provides any of electric energy, protection of fish from direct solar radiation, predator protection for fish, for example, from fish-predatory birds, and optionally heat to the water in fish cage (5), or any combination thereof. Furthermore, the invention provides for a method of raising fish using said floating solar-powered multi-unit fish cage (1).

With increased demand for fish and fish protein coinciding with overfishing the oceans and continental fresh water reserves, fish farming or pisciculture is expanding rapidly. Fish are hatched, fed and raised in tanks and ponds (aquaculture) or ashore (mariculture). The most important cultured fish species produced in fish farming are carp, tilapia, salmon, trout and catfish, but also shrimp, lobsters and eatable aquatic plants such as seaweed and algae enjoy increased popularity. All are part of the current invention and will be generically by called "fish" in this document.

Most commonly, fish cages are placed in lakes, bayous, ponds, rivers or oceans to contain and protect fish until harvest. When placed in the sea the method is called "off-shore cultivation". One problem with permanently located fish cages is the bio-pollution from the unfed food and the feces of the caged fish, that is most intense on the ground below. Where necessary fish farmers rely on water exchange and water treatment, which requires energy for pumps. At present, diesel and electricity costs are significant for the aquaculture industry. Already governments are tightening the regulations. By 2021 diesel will be banned from Norwegian off shore fish farms.

Where shore-based electricity is not available, solar energy produced on-site is a "green" option. However, solar energy requires a lot of space, in particular, if strong pumps need to be operated for longer time periods. Already today, there are large floating planar islands, so called solar islands, that provide solar energy and are linked via cable to shore-installed power stations.

Furthermore, it is known by fish culture experts that water temperature and fish comfort have a strong influence on weight gain and time to harvest. For example, fish growing in fish farms near nuclear power plants that give off excess heat to rivers in the winter grow significantly faster than the fish further up the river in the colder water. Also, fish under stress will swim more erratically and, thus, consume more energy.

KR 2014 0046497 A and KR 2011 0004967 A disclose each a fish cage comprising a floating planar grid defining at least two grid interspaces, at least one or more solar units and at least one or more fish cages, wherein at least one fish cage is allocated to at least one grid interspace, at least one solar unit is allocated to at least one grid interspace, at least partially or completely covering said grid interspace, thus forming a solar unit-covered grid interspace.

In view of the above, it is the objective of the present invention to provide an improved floating fish cage that is optimized for energy-efficient fish culture.

In a first aspect, the objective is solved by a floating solar-powered multi-unit fish cage, comprising
(i) a floating planar grid, the grid defining at least two grid interspaces,
(ii) at least one or more solar units, and
(iii) at least one or more fish cages,
wherein
(a) at least one fish cage is allocated to at least one grid interspace,
(b) at least one solar unit is allocated to at least one grid interspace, at least partially or completely covering said grid interspace, thus forming a solar unit-covered grid interspace,
(c) at least one solar unit-covered grid interspace partially spans at least one fish cage forming a partially covered fish cage,
(d) the partially covered fish cage allows for caged fish to voluntarily position under the at least one solar unit-covered grid interspace, and
(e) the at least one at least partially solar unit-covered grid interspace provides any of
   a. electric energy,
   b. protection of fish from direct solar radiation,
   c. predator protection for fish, for example, from fish-predatory birds, and
   d. optionally heat to the water in fish cage
   or any combination thereof.

The multi-unit fish cage comprises a floating, essentially planar grid, wherein the grid defines at least two grid interspaces, each of the grid interspaces forming a or part of a solar unit and/or a fish cage, or other functional units. The grid itself can float by itself, e.g. because it is formed from hollow structures, e.g. tubes, or it comprises additional flotation means, e.g. pontoons. Optionally, the term floating grid includes grids that stand firmly on the ground and protrude above water level.

The term grid, as used herein, encompasses any planar grid-like structure that forms essentially planar interspaces, e.g. square, rectangular, hexagonal, octagonal, round, oval, etc.

Typically, the grid's beam structure allows for walking, feeding, harvesting and working on the interstitial spaces and supports the solar units and further machinery for fish farming.

Regularly, at least one fish cage is allocated to at least one grid interspace, or, optionally, at least one fish cage is allocated to at least two or more grid interspaces, so that the grid beams align and cross the fish cage.

The same, at least one solar unit is allocated to at least one grid interspace, at least partially or completely covering said grid interspace, thus forming a solar unit-covered grid interspace. For example, the solar unit may comprise solar panel(s) that can be hinged, folded and or slid to uncover or partially uncover the at least one grid interspace beneath.

Because the floating fish cage is designed so that at least one solar unit-covered grid interspace partially spans at least one fish cage forming a partially covered fish cage, this arrangement allows for caged fish to voluntarily locate, i.e. position themselves under the at least one solar unit-covered grid interspace.

Depending on climate, sun irradiation, water temperature, day and nighttime, predatory risk and the fish's comfort, the fish relocate, i.e. reposition themselves and choose between the solar unit-covered part of the fish cage (sun and predator-protected) and the open part of the fish cage (sun-heated, daylight). And optionally, the degree of coverage can be adapted, e.g. incrementally, i.e. increased or decreased, by hinging, folding and sliding the solar unit. In one alternative, the solar modules are slidable to cover or uncover the fish cage partially or even completely. In another alternative, when the solar module is mounted on a foil that at least partially covers a grid interspace, this foil can be at least partially furled or folded to decrease the effective solar module area and coverage.

At the same time, the at least one solar unit-covered grid interspace advantageously provides electric energy, protection of fish from direct solar radiation, predator protection for fish, for example, from fish-predatory birds, and optionally heat to the water in the fish cage. And with the overlap of fish cage(s) and solar unit(s) the available useful area of the multi-unit fish cage is optimized.

In an alternative embodiment, the floating fish cage of the present invention is one, wherein at least one grid interspace is a solar unit-covered grid interspace, and at least one grid interspace is an open grid interspace.

The fish cage(s) may comprise a mesh or grid for free water exchange from the aqueous fish compartment with surrounding water. One alternative for practicing this embodiment are copper-alloy nets, e.g. made from copper-nickel or copper-silicon. Copper alloys are antimicrobial and kill bacteria, viruses, fungi, algae and other microbes, thus preventing biofouling, i.e. the undesirable accumulation, adhesion and growth of microorganisms, plants, algae, tube worms, barnacles, mollusks and other organisms. To the contrary, traditional netting involves regular and labor-intensive cleaning. Copper netting also has strong structural and corrosion-resistant properties in marine environments.

In an alternative embodiment, the floating fish cage of the present invention is one, wherein the at least one fish cage is a closed fish cage forming a closed aqueous fish compartment, thus hindering water exchange with surrounding water. For such embodiments, water regeneration is regularly required in order to avoid accumulation of remaining fish feed, urine and feces.

The closed fish cage (8) can be constructed from rigid inflexible and watertight materials that keep a container-like shape even under pressure from surrounding moving water. Or the closed fish cage (8) can be constructed from flexible watertight materials, e.g. the closed fish cage (8) may comprise a watertight flexible sheet(s) or membrane (9), e.g. made from polyethylene (e.g. HDPE or LDPE), polyvinylchloride, and ethylene propylene diene methylene rubber.

When the closed fish cage comprises a watertight flexible sheet(s), it optionally has an inner water level extending above the outer water level floating the fish cage, thus exerting hydropressure on the flexible sheet(s) of the fish cage to stabilize its maximum volume and shape.

In short, the weight of the water above the outer water level pushes down by its gravity on the water inside the flexible sheet(s), thereby exerting a homogenous pressure on all flexible walls.

For a form-stable, watertight, flexible closed fish cage comprising a flexible sheet(s) it is of advantage that the vertical difference between the inner water level and the outer water level, i.e. water column height, of the closed fish cage is at least 5 to 100 cm, optionally at least 10 to 70cm, optionally 15 to 60 cm, and optionally 20 to 50 cm.

For this embodiment, for example, the volume of the closed fish cage is at least 2 to 100 m³, optionally at least 3 to 80 m³, optionally 4 to 70 m³, and optionally 5 to 50 m³.

In an alternative embodiments of the flexible closed fish cage for practicing the invention, the vertical difference between the inner water level and the outer water level of the closed fish cage is at least 5 to 100 cm, optionally at least 20 to 50 cm, and the volume of the closed fish cage (8) is at least 3 to 80 m³, optionally at least 5 to 50 m³.

Of course, the floating fish cage of the invention can feature grid interspaces having different sizes and shapes. However, the at least one grid interspace may have substantially the same planar dimensions for receiving and/or mounting the at least one or more solar units and/or the at least one or more fish cages, thus rendering the grid interspaces suitable for receiving both options interchangeably. Moreover, this gives to possibility to layout the floating fish cage in accordance with the given environmental conditions, wishes of the fish farmer and needs of the fishes.

The at least one or more solar units of the floating fish cage may comprise solar panels that can be hinged, folded and/or slid to uncover, e.g. partially and/or incrementally, the at least one grid interspace beneath. This way, the covered space can be adjusted to increase or reduce the solar unit coverage.

The one or more solar units of the floating fish cage of the invention can provide heat to the water of at least one fish cage by supplying electricity to an electric heater and/or by direct contact to the water by lost heat during electricity generation. As mentioned before, warmer water can lead to less energy losses and better weight gain of the fish. This is particularly useful in colder waters, e.g. in Canada and northern Europe.

Of course, the solar units on the floating fish cage may be flexibly positioned to
(i) optimize solar radiation input and energy output,
(ii) optimize shade and/or predator-protection for fish, and/or
(iii) contact water of the fish cage to transfer lost heat during electricity generation.

In alternative embodiments, the floating fish cage of the invention can be constructed so that the at least one fish cage and/or the at least one solar unit is connected to the floating grid by detachable connecting means, optionally selected from the group consisting of screws, hooks, eyes, slide fastener and hook-and-loop fastener. This way, the grid interspaces can be adapted as needed to reduce or increase the number of solar unit-covered interspaces and fish cage-forming interspaces.

In a further aspect, the present invention is directed to a method for raising fish in a floating fish cage, comprising the steps of
(i) providing a floating solar-powered multi-unit fish cage according to any of claims 1 to 14,
(ii) introducing, feeding and growing fish in the at least one or more fish cages, and
(iii) producing electric energy by means of the at least one or more solar units.

Optionally, the method of raising fish further comprises the step of heating the water in the at least one fish cage by electricity from the at least one or more solar units or its lost heat during electricity generation.

In a further alternative of the method of the invention the method may further comprise the step of flexibly positioning the one or more solar units to (a) optimize solar radiation input and energy output, (b) optimize shade and/or predator-protection for fish, and/or (c) contact water of the fish cage to transfer lost heat during electricity generation.

In the following, the invention will be described by reference to representative figures, none of which are to be considered as limiting the scope of the claims as appended.

### Figure legend

| | | | |
|---|---|---|---|
| (1) | Floating solar-powered multi-unit fish cage cage | (7) | Partially covered or uncovered fish |
| (2) | Floating planar grid | (8) | Closed fish cage |
| (3) | Grid interspaces | (9) | Watertight flexible sheet |
| (4) | Solar unit comprising solar panels (4') | (10) | Inner water level |
| (5) | Fish cage | (11) | Outer water level |
| (6) | Solar unit-covered grid interspace | (12) | Flotation means |

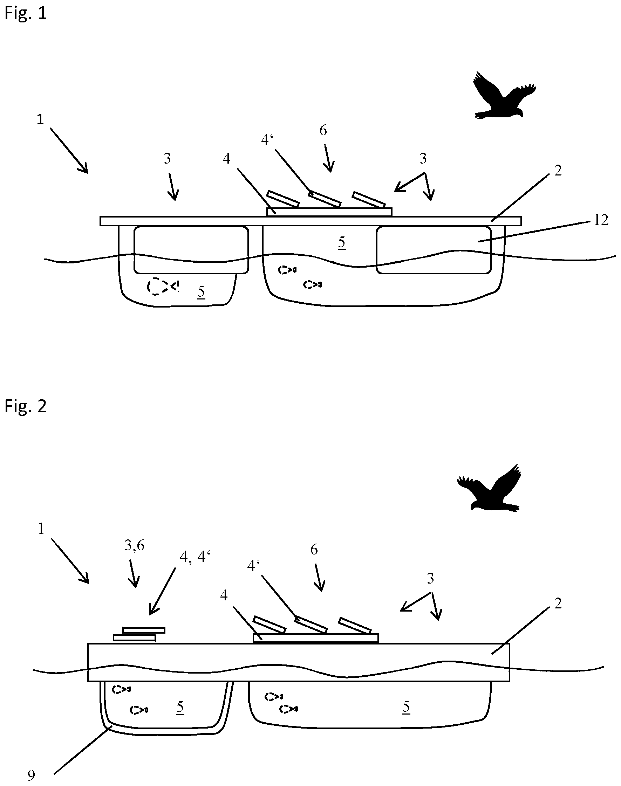

**Fig. 1** shows an optional embodiment of a floating solar-powered multi-unit fish cage 1 in side view featuring a floating planar grid 2 with three grid interspaces 3 from left to right and flotation means 12, e.g. pontoons. The grid interspace 3 on the left side forms a small fish cage 5 for large fish that is uncovered on top, e.g. fish ready for harvest and/or fish too large to be prey. The middle and right interspaces 3 form a continuous large fish cage for small fish with the middle grid interspace 3 being covered by a solar unit 4 comprising solar panels 4', e.g. angled and hinged solar panels 4', for better radiation uptake and/or aeration and/or fish protection from predators. The fish can position themselves under solar unit-covered grid interspace 6 or uncovered fish cage 7. Aquatic plants may grow better in the shade of the solar unit, the opening in the interspaces 3 allowing for easy harvesting.
**Fig. 2** shows a further embodiment of a floating solar-powered multi-unit fish cage 1 in side view featuring a grid 2 of hollow self-floating tubes and providing for three grid interspaces 3 from left to right. The left grid interspace 3 forms a closed fish cage 8 made from watertight flexible sheet material 9 and the material is a two-layer material providing for temperature insulation. The same as for Fig. 1, the middle and right interspaces 3 of Fig. 2 form a continuous large fish cage 5 with the middle grid interspace 3 being covered by a solar unit 4 comprising solar panels 4', e.g. angled and hinged solar panels 4' for better radiation uptake and/or aeration and/or fish protection from predators. The fish can position themselves under solar unit-covered grid interspace 6 or uncovered fish cage 7.

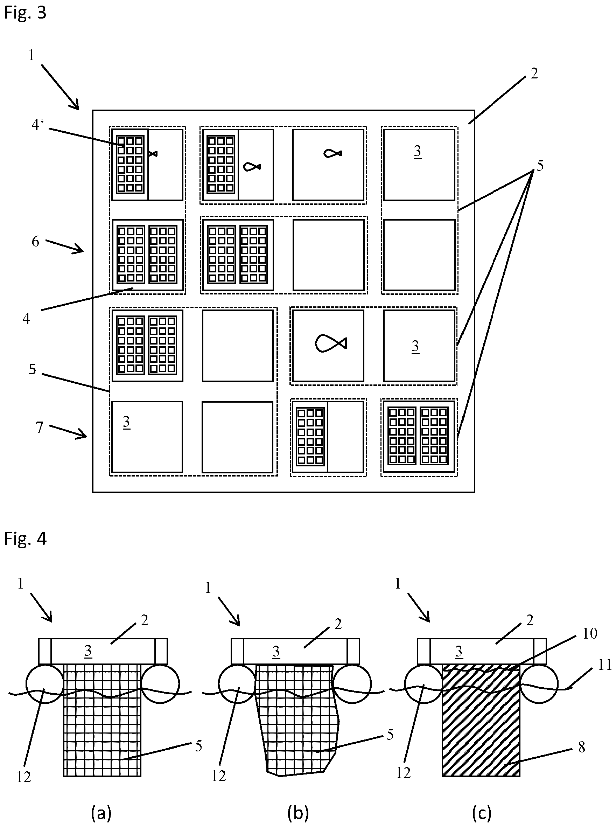

**Fig. 3** is a top view of a floating solar-powered multi-unit fish cage 1 with 4 x 4 grid 2 interspaces 3. Some of the grid interspaces 3 are grouped to form a continuous fish cage 5 spanning 2 or four interspaces 3. Some of the single or grouped interspaces 3 forming fish cages 5 are partially or completely covered by one or more solar units 4 comprising solar panels 4', thus providing for predatory protection, electricity and/or heat.
**Fig. 4** is a side view of three embodiments of a grid interspace unit 3 taken from a floating solar-powered multi-unit fish cage 1 featuring flotation means 12, e.g. pontoons.
**Fig. 4a** describes a rectangular rigid net structure forming the fish cage 5.
**Fig. 4b** shows the same grid interspace unit 3 taken from a floating solar-powered multi-unit fish cage 1 as in Fig. 2 but with a flexible net and a current impact from the left side that deforms the rectangular shape of the net.
**Fig. 4c** shows the same grid interspace unit 3 taken from a floating solar-powered multi-unit fish cage 1 as in Figs. 1 and 2 but with a closed fish cage 8 made from a watertight flexible sheet 9, striated. The inner water level 10, i.e. the water level inside the closed fish cage 8, extends above the outer water level 11 floating the fish cage 1, thus exerting hydropressure on the flexible sheets 9 of the closed fish cage 8 to stabilize its maximum volume and shape.

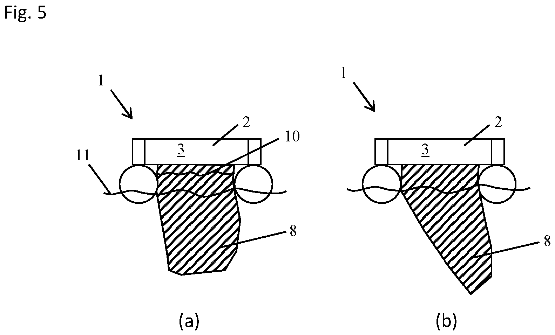

**Fig. 5a** shows the same grid interspace unit 3 from a floating solar-powered multi-unit fish cage 1 as in Fig. 4c but with a current impact from the left side leading to slight deformation of the closed fish cage 8 made from watertight flexible material 9 and featuring the shape-stabilizing higher inner water level 10.
**Fig. 5b** is the same as Fig. 5a but with much more deformation by the same current impact from the left side and without a stabilizing inner water level 10, i.e. without hydropressure.

## Claims

1. A floating solar-powered multi-unit fish cage (1), comprising
(i) a floating planar grid (2), the grid (2) defining at least two grid interspaces (3),
(ii) at least one or more solar units (4), and
(iii) at least one or more fish cages (5),
wherein
(a) at least one fish cage (5) is allocated to at least one grid interspace (3),
(b) at least one solar unit (4) is allocated to at least one grid interspace (3), at least partially or completely covering said grid interspace (3), thus forming a solar unit-covered grid interspace (6),
(c) at least one solar unit-covered grid interspace (6) partially spans at least one fish cage (5) forming a partially covered fish cage (7),
(d) the partially covered fish cage (7) allows for caged fish to voluntarily position under the at least one, at least partially solar unit-covered grid interspace (6), and
(e) the at least one solar unit-covered grid interspace (6) provides any of
a. electric energy,
b. protection of fish from direct solar radiation,
c. predator protection for fish, for example, from fish-predatory birds, and
d. optionally heat to the water in fish cage (5),
or any combination thereof

2. The floating fish cage (1) of claim 1, wherein at least one fish cage (5) is allocated to at least two or more grid interspaces (3).

3. The floating fish cage (1) of claim 2, wherein at least one grid interspace (3) is a solar unit-covered grid interspace (6), and at least one grid interspace (3) is an open grid interspace (3).

4. The floating fish cage (1) of any of claims 1 to 3, wherein the at least one fish cage (5) comprises a mesh or grid for water exchange from the aqueous fish compartment with surrounding water.

5. The floating fish cage (1) of any of claims 1 to 4, wherein the at least one fish cage (5) is a closed fish cage (8) forming a closed aqueous fish compartment, thus hindering water exchange with surrounding water.

6. The floating fish cage (1) of claim 5, wherein the closed fish cage (8) comprises a watertight flexible sheet(s) (9) and has an inner water level (10) extending above the outer water level (11) floating the fish cage (1), thus exerting hydropressure on the flexible sheet(s) (9) of the fish cage (5) to stabilize its maximum volume and shape.

7. The floating fish cage (1) of claim 6, wherein a vertical difference between the inner water level (10) and the outer water level (11), i.e. water column height, of the closed fish cage (8) is at least 5 to 100 cm, optionally at least 10 to 70 cm, optionally 15 to 60 cm, and optionally 20 to 50 cm.

8. The floating fish cage (1) of claim 6, wherein the volume of the closed fish cage (8) is at least 2 to 100 m³, optionally at least 3 to 80 m³, optionally 4 to 70 m³, and optionally 5 to 50 m³.

9. The floating fish cage (1) of any one of claims 7 and 8, wherein the vertical difference between the inner water level (10) and the outer water level (11) of the closed fish cage (8)is at least 5 to 100 cm, optionally at least 20 to 50 cm, and the volume of the closed fish cage (8) is at least 3 to 80 m³, optionally at least 5 to 50 m³.

10. The floating fish cage (1) of any of claims 1 to 9, wherein the at least one grid interspace (3) for receiving and/or mounting the at least one or more solar units (4) and the at least one or more fish cages (5) have substantially the same planar dimensions, thus rendering the grid interspaces (3) suitable for receiving both options interchangeably.

11. The floating fish cage (1) of any of claims 1 to 10, wherein the at least one or more solar units (4) comprise solar panels that can be hinged, folded and or slid to uncover the at least one grid interspace (3) beneath.

12. The floating fish cage (1) of any of claims 1 to 11, wherein the at least one or more solar units (4) provide can provide heat to the water of at least one fish cage (5) by supplying electricity to an electric heater and/or by direct contact to the water by lost heat during electricity generation.

13. The floating fish cage (1) of any of claims 1 to 12, wherein one or more of the solar units (4) can be flexibly positioned to
(i) optimize solar radiation input and energy output,
(ii) optimize shade and/or predator-protection for fish, and/or
(iii) contact water of the fish cage (5) to transfer lost heat during electricity generation.

14. The floating fish cage (1) of any of claims 1 to 10, wherein the at least one fish cage (5) and/or the at least one solar unit (4) is connected to the floating grid (2) by detachable connecting means selected from the group consisting of screws, hooks, eyes, slide fastener and hook-and-loop fastener.

15. A method for raising fish in a floating fish cage, comprising the steps of
(i) providing a floating solar-powered multi-unit fish cage (1) according to any of claims 1 to 14,
(ii) introducing, feeding and growing fish in the at least one or more fish cages (5), and
(iii) producing electric energy by means of the at least one or more solar units (4).

16. The method of raising fish according to claim 15, further comprising the step of heating the water in the at least one fish cage (5) by electricity from the at least one or more solar units (4) or its lost heat during electricity generation.

17. The method of raising fish according to claim 15 or 16, further comprising the step of flexibly positioning the one or more solar units (4) to
(a) optimize solar radiation input and energy output,
(b) optimize shade and/or predator-protection for fish, and/or
(c) contact water of the fish cage (5) to transfer lost heat during electricity generation.

## Patentansprüche

1. Ein schwimmender, solarbetriebener Fischkäfig (1) mit mehreren Einheiten, bestehend aus
(i) ein schwebendes planares Gitter (2), wobei das Gitter (2) mindestens zwei Gitterzwischenräume (3) definiert,
(ii) mindestens eine oder mehrere Solareinheiten (4), und
(iii) mindestens einem oder
mehreren Fischkäfigen (5), wobei
(a) mindestens ein Fischkäfig (5) ist mindestens einem Gitterzwischenraum (3) zugeordnet,
(b) mindestens eine Solareinheit (4) mindestens einem Netzzwischenraum (3) zugeordnet ist, die den Netzzwischenraum (3) zumindest teilweise oder vollständig überdeckt und so einen mit Solareinheiten bedeckten Netzzwischenraum (6) bildet,
(c) mindestens ein mit Solarzellen bedeckter Gitterzwischenraum (6) überspannt teilweise mindestens einen Fischkäfig (5) und bildet einen teilweise bedeckten Fischkäfig (7),
(d) der teilweise abgedeckte Fischkäfig (7) es den eingesperrten Fischen ermöglicht, sich freiwillig unter dem mindestens einen, zumindest teilweise mit einer Sonneneinheit abgedeckten Gitterzwischenraum (6) zu positionieren, und
(e) der mindestens eine mit Solareinheiten bedeckte Gitterzwischenraum (6) eine der folgenden Eigenschaften aufweist
a. elektrische Energie,
b. Schutz der Fische vor direkter Sonneneinstrahlung,
c. Schutz der Fische vor Raubtieren, zum Beispiel vor fischfressenden Vögeln, und
d. optional Wärme für das Wasser im Fischkäfig (5)
oder eine Kombination davon

2. Schwimmende Fischreuse (1) nach Anspruch 1, wobei mindestens eine Fischreuse (5) mindestens zwei oder mehreren Gitterzwischenräumen (3) zugeordnet ist.

3. Schwimmender Fischkäfig (1) nach Anspruch 2, wobei mindestens ein Gitterzwischenraum (3) ein mit Solareinheiten abgedeckter Gitterzwischenraum (6) ist und mindestens ein Gitterzwischenraum (3) ein offener Gitterzwischenraum (3) ist.

4. Der schwimmende Fischkäfig (1) nach einem der Ansprüche 1 bis 3, wobei der mindestens eine Fischkäfig (5) ein Netz oder Gitter für den Wasseraustausch zwischen dem wässrigen Fischkompartiment und dem umgebenden Wasser umfasst.

5. Schwimmende Fischreuse (1) nach einem der Ansprüche 1 bis 4, wobei die mindestens eine Fischreuse (5) eine geschlossene Fischreuse (8) ist, die ein geschlossenes wässriges Fischkompartiment bildet und so den Wasseraustausch mit dem umgebenden Wasser verhindert.

6. Schwimmende Fischreuse (1) nach Anspruch 5, wobei die geschlossene Fischreuse (8) eine wasserdichte flexible Folie(n) (9) umfasst und einen inneren Wasserspiegel (10) aufweist, der sich über den äußeren Wasserspiegel (11) der schwimmenden Fischreuse (1) erstreckt, wodurch ein Wasserdruck auf die flexible(n) Folie(n) (9) der Fischreuse (5) ausgeübt wird, um deren maximales Volumen und Form zu stabilisieren.

7. Schwimmende Fischreuse (1) nach Anspruch 6, wobei eine vertikale Differenz zwischen dem inneren Wasserspiegel (10) und dem äußeren Wasserspiegel (11), d.h. die Höhe der Wassersäule, der geschlossenen Fischreuse (8) mindestens 5 bis 100 cm, wahlweise mindestens 10 bis 70 cm, wahlweise 15 bis 60 cm beträgt, und wahlweise 20 bis 50 cm.

8. Schwimmende Fischreuse (1) nach Anspruch 6, wobei das Volumen der geschlossenen Fischreuse (8) mindestens 2 bis 100 m³, optional mindestens 3 bis 80 m³, optional 4 bis 70 m³, und optional 5 bis 50 m³.

9. Schwimmende Fischreuse (1) nach einem der Ansprüche 7 und 8, wobei der vertikale Unterschied zwischen dem inneren Wasserspiegel (10) und dem äußeren Wasserspiegel (11) der geschlossenen Fischreuse (8) beträgt mindestens 5 bis 100 cm, optional mindestens 20 bis 50 cm, und das Volumen des geschlossenen Fischkäfigs (8) beträgt mindestens 3 bis 80 m³, optional mindestens 5 bis 50 m³.

10. Der schwimmende Fischkäfig (1) nach einem der Ansprüche 1 bis 9, wobei der mindestens eine Gitterzwischenraum (3) zur Aufnahme und/oder Befestigung der mindestens einen oder mehreren Solareinheiten (4) und der mindestens einen oder mehreren Fischkäfige (5) haben im Wesentlichen die gleichen ebenen Abmessungen, so dass sich die Gitterzwischenräume (3) für die Aufnahme beider Optionen austauschbar eignen.

11. Schwimmende Fischreuse (1) nach einem der Ansprüche 1 bis 10, wobei die mindestens eine oder mehrere Solareinheiten (4) Solarpaneele umfassen, die aufklappbar, faltbar und/oder verschiebbar sind, um den mindestens einen darunter liegenden Gitterzwischenraum (3) freizulegen.

12. Der schwimmende Fischkäfig (1) nach einem der Ansprüche 1 bis 11, wobei die mindestens eine oder mehrere Solaranlagen (4) das Wasser mindestens eines Fischkäfigs (5) mit Wärme versorgen können, indem sie Strom an eine elektrische Heizung liefern und/oder durch direkten Kontakt mit dem Wasser durch Verlustwärme während der Stromerzeugung.

13. Der schwimmende Fischkäfig (1) nach einem der Ansprüche 1 bis 12, wobei eine oder mehrere der Solareinheiten (4) kann flexibel positioniert werden, um
(i) den solaren Strahlungseintrag und den Energieertrag zu optimieren,
(ii) die Beschattung und/oder den Raubtierschutz für Fische zu optimieren, und/oder
(iii) Kontaktwasser des Fischkäfigs (5) zur Übertragung der bei der Stromerzeugung verlorenen Wärme.

14. Schwimmende Fischreuse (1) nach einem der Ansprüche 1 bis 10, wobei die mindestens eine Fischreuse (5) und/oder die mindestens eine Solareinheit (4) mit dem schwimmenden Gitter (2) durch lösbare Verbindungsmittel, ausgewählt aus der Gruppe bestehend aus Schrauben, Haken, Ösen, Reißverschlüssen und Klettverschlüssen, verbunden ist.

15. Verfahren zur Aufzucht von Fischen in einem schwimmenden Fischkäfig, das die folgenden Schritte umfasst
(i) Bereitstellung eines schwimmenden, solarbetriebenen Fischkäfigs (1) mit mehreren Einheiten nach einem der Ansprüche 1 bis 14,
(ii) Einsetzen, Füttern und Züchten von Fischen in mindestens einem oder mehreren Fischkäfigen (5), und
(iii) Erzeugung von elektrischer Energie mit Hilfe der mindestens einen oder mehreren Solaranlagen (4).

16. Verfahren zur Aufzucht von Fischen nach Anspruch 15, das ferner den Schritt des Erhitzens des Wassers in dem mindestens einen Fischkäfig (5) durch Elektrizität von der mindestens einen oder den mehreren Solareinheiten (4) oder deren Verlustwärme während der Stromerzeugung umfasst.

17. Verfahren zur Fischaufzucht nach Anspruch 15 oder 16, das ferner den Schritt der flexiblen Positionierung der einen oder mehreren Solareinheiten (4) umfasst, um
(a) den solaren Strahlungseintrag und den Energieertrag zu optimieren,
(b) die Beschattung und/oder den Raubtierschutz für Fische zu optimieren, und/oder
(c) Kontaktwasser des Fischkäfigs (5) zur Übertragung der bei der Stromerzeugung verlorenen Wärme.

## Revendications

1. Cage à poissons flottante à énergie solaire (1), comprenant
(i) une grille planaire flottante (2), la grille (2) définissant au moins deux espaces intermédiaires (3),
(ii) au moins une ou plusieurs unités solaires (4), et
(iii) au moins une ou plusieurs cages à poissons (5), dans lesquelles
(a) au moins une cage à poissons (5) est attribuée à au moins un espace intermédiaire de la grille (3),
(b) au moins une unité solaire (4) est affectée à au moins un espace intermédiaire de la grille (3), couvrant au moins partiellement ou complètement ledit espace intermédiaire de la grille (3), formant ainsi un espace intermédiaire de la grille couvert par l'unité solaire (6),
(c) au moins un espace intermédiaire (6) couvert par une unité solaire recouvre partiellement au moins une cage à poissons (5), formant une cage à poissons partiellement couverte (7),
(d) la cage à poissons partiellement couverte (7) permet aux poissons en cage de se positionner volontairement sous l'au moins un espace intermédiaire (6) de la grille au moins partiellement couvert par l'unité solaire, et
(e) l'espace intermédiaire (6) de la grille couverte par l'unité solaire au moins fournit l'un des éléments suivants
a. l'énergie électrique,
b. la protection des poissons contre le rayonnement solaire direct,
c. la protection des poissons contre les prédateurs, par exemple les oiseaux prédateurs de poissons, et
d. éventuellement, chaleur dans l'eau de la cage à poissons (5),
ou toute combinaison de ces éléments.

2. La cage à poissons flottante (1) de la revendication 1, dans laquelle au moins une cage à poissons (5) est attribuée à au moins deux ou plusieurs interstices de la grille (3).

3. La cage à poissons flottante (1) de la revendication 2, dans laquelle au moins un espace intermédiaire de grille (3) est un espace intermédiaire de grille couvert par une unité solaire (6), et au moins un espace intermédiaire de grille (3) est un espace intermédiaire de grille ouvert (3).

4. La cage à poissons flottante (1) de l'une des revendications 1 à 3, dans laquelle l'au moins une cage à poissons (5) comprend un filet ou une grille pour l'échange d'eau entre le compartiment aqueux des poissons et l'eau environnante.

5. La cage à poissons flottante (1) de l'une des revendications 1 à 4, dans laquelle l'au moins une cage à poissons (5) est une cage à poissons fermée (8) formant un compartiment aqueux fermé pour les poissons, empêchant ainsi l'échange d'eau avec l'eau environnante.

6. La cage à poissons flottante (1) de la revendication 5, dans laquelle la cage à poissons fermée (8) comprend une (des) feuille(s) flexible(s) étanche(s) (9) et a un niveau d'eau intérieur (10) s'étendant au-dessus du niveau d'eau extérieur (11) flottant dans la cage à poissons (1), exerçant ainsi une hydropression sur la (les) feuille(s) flexible(s) (9) de la cage à poissons (5) pour stabiliser son volume et sa forme maximums.

7. La cage à poissons flottante (1) de la revendication 6, dans laquelle une différence verticale entre le niveau d'eau intérieur (10) et le niveau d'eau extérieur (11), c'est-à-dire la hauteur de la colonne d'eau, de la cage à poissons fermée, se traduit par une différence entre le niveau d'eau intérieur (10) et le niveau d'eau extérieur (11).
(8) est d'au moins 5 à 100 cm, éventuellement d'au moins 10 à 70 cm, éventuellement de 15 à 60 cm, et éventuellement de 20 à 50 cm.

8. La cage à poissons flottante (1) de la revendication 6, dans laquelle le volume de la cage à poissons fermée (8) est d'au moins 2 à 100 m³ , éventuellement d'au moins 3 à 80 m³ , éventuellement de 4 à 70 m³ , et éventuellement de 5 à 50 m³.

9. La cage à poissons flottante (1) de l'une des revendications 7 et 8, dans laquelle la différence verticale entre le niveau d'eau intérieur (10) et le niveau d'eau extérieur (11) de la cage à poissons fermée
(8) est d'au moins 5 à 100 cm, éventuellement d'au moins 20 à 50 cm, et le volume de la cage à poissons fermée (8) est d'au moins 3 à 80 m³ , éventuellement d'au moins 5 à 50 m³.

10. La cage à poissons flottante (1) de l'une des revendications 1 à 9, dans laquelle l'au moins un espace intermédiaire de la grille (3) pour recevoir et/ou monter au moins une ou plusieurs unités solaires (4) et au moins une ou plusieurs cages à poissons (5) ont sensiblement les mêmes dimensions planes, ce qui rend les interstices de la grille (3) aptes à recevoir les deux options de manière interchangeable.

11. La cage à poissons flottante (1) de l'une des revendications 1 à 10, dans laquelle au moins une ou plusieurs unités solaires (4) comprennent des panneaux solaires qui peuvent être articulés, pliés ou glissés pour découvrir au moins un espace intermédiaire de grille (3) en dessous.

12. La cage à poissons flottante (1) de l'une des revendications 1 à **11,** dans laquelle au moins une ou plusieurs unités solaires (4) peuvent fournir de la chaleur à l'eau d'au moins une cage à poissons (5) en fournissant de l'électricité à un chauffage électrique et/ou par contact direct avec l'eau par la chaleur perdue lors de la production d'électricité.

13. La cage à poissons flottante (1) de l'une des revendications 1 à 12, dans laquelle une ou plusieurs des unités solaires
(4) peut être positionné de manière flexible pour
(i) optimiser l'apport de rayonnement solaire et la production d'énergie,
(ii) optimiser l'ombre et/ou la protection contre les prédateurs pour les poissons, et/ou
(iii) l'eau de contact de la cage à poissons (5) pour transférer la chaleur perdue lors de la production d'électricité.

14. La cage à poissons flottante (1) de l'une des revendications 1 à 10, dans laquelle l'au moins une cage à poissons (5) et/ou l'au moins une unité solaire (4) est reliée à la grille flottante (2) par des moyens de connexion amovibles choisis dans le groupe constitué par les vis, les crochets, les œillets, les fermetures à glissière et les fermetures à boucles et à crochets.

15. Méthode d'élevage de poissons dans une cage à poissons flottante, comprenant les étapes suivantes
(i) fournir une cage à poissons flottante à énergie solaire (1) selon l'une des revendications 1 à 14,
(ii) introduire, nourrir et faire grandir des poissons dans au moins une ou plusieurs cages à poissons (5), et
(iii) produire de l'énergie électrique au moyen d'au moins une ou plusieurs unités solaires (4).

16. Méthode d'élevage de poissons selon la revendication 15, comprenant en outre l'étape consistant à chauffer l'eau dans au moins une cage à poissons (5) à l'aide de l'électricité provenant d'au moins une ou plusieurs unités solaires (4) ou de la chaleur perdue lors de la production d'électricité.

17. La méthode d'élevage de poissons selon la revendication 15 ou 16, comprenant en outre l'étape de positionnement flexible d'une ou plusieurs unités solaires (4) pour
(a) optimiser l'apport de rayonnement solaire et la production d'énergie,
(b) optimiser l'ombre et/ou la protection contre les prédateurs pour les poissons, et/ou
(c) l'eau de contact de la cage à poissons (5) pour transférer la chaleur perdue lors de la production d'électricité.
